# EUROPEAN PATENT SPECIFICATION

(11) **EP 4 606 654 B1**
(45) Date of publication and mention of the grant of the patent: **19.08.2026**
(21) Application number: 25160158.9
(22) Date of filing: 26.02.2025
(51) Int. Cl.: B60R 16/023, B60R 21/01

(54) **STATE SETTING METHOD AND DEVICE OF PASSENGER-SIDE AIRBAG**
VERFAHREN UND VORRICHTUNG ZUR ZUSTANDSEINSTELLUNG DES FAHRGAST-SEITIGEN AIRBAGS
PROCÉDÉ ET DISPOSITIF DE RÉGLAGE D'ÉTAT D'UN COUSSIN DE SÉCURITÉ GONFLABLE CÔTÉ PASSAGER

(30) Priority: 26.02.2024 CN 202410210550
(43) Date of publication of application: 27.08.2025
(73) Proprietor: Guangzhou Xiaopeng Motors Technology Co., Ltd., Guangzhou, Guangdong 510630 (CN)
(72) Inventor: Xiaolong, Ma, Guangzhou, 510640 (CN)
(74) Representative: Isarpatent

(56) References cited:
- CN-B- 110 171 373

## Description

### TECHNICAL FIELD

The present invention relates to the technical field of vehicle equipment, and in particular, to a state setting method of a functional component, a state setting device of a passenger-side airbag, and a vehicle.

### DESCRIPTION OF THE RELATED ART

For vehicles equipped with a passenger-side airbag, setting of disabled and enabled states of the passenger-side airbag is related to the safety of users. If a child sits in the passenger-side seat, it must be guaranteed that the passenger-side airbag is kept disabled, otherwise it would cause fatal injury to the child in a case where it is deployed during collision; On the contrary, if instead of a child, an adult, sits in the passenger-side seat, it must be guaranteed that the passenger-side airbag is kept enabled, in order to ensure the passenger-side airbag to be deployed during collision to protect the adult. Therefore, the setting and state indication of the passenger-side airbag both have functional safety property, and thus there are usually safety requirements for control switch and state display.

Since a physical button has certain safety property, in the relevant art, most of the state control switches for the passenger-side airbag employ a control manner of physical button, however, cost of the physical button with safety property is relatively high.

Document CN 110 171 373 B relates to a method of configuring shortcut keys for use in vehicles and vehicles equipped with the relevant system. The current operating state of the vehicle is identified and the shortcut keys are configured to trigger the functions or combinations of functions corresponding to that state. It is therefore possible to intelligently adjust the functions of the shortcut keys in real time, taking into account the current state of the automobile. In other words, one shortcut key can integrate the effect of multiple existing shortcut keys.

### SUMMARY

A main object of the present invention is to propose a state setting method of a functional component, a state setting device of a passenger-side airbag, and a vehicle, which aims to eliminate the physical button and integrate the physical button into a display screen for control, while making the control function integrated into the display screen have safety property.

To achieve the above object, the present invention proposes a state setting method of a functional component, the state setting method of the functional component comprises:
upon receiving a state setting signal of the functional component, generating a setting verification channel and monitoring the setting verification channel in real time;
according to whether a verification signal of the setting verification channel is detected within a first preset time period, the state setting method of the functional component further comprising:
   responding to the state setting signal, if the verification signal of the setting verification channel is detected within the first preset time period;
   and outputting a prompt information of state setting failure and not responding to the state setting signal, if the verification signal of the setting verification channel is not detected within the first preset time period,
   wherein the functional component is a passenger-side airbag, and the step of responding to the state setting signal comprises:
      detecting a signal of a child seat on a passenger-side seat; and setting the state of the passenger-side airbag according to a detection result and the state setting signal,
      wherein the step of setting the state of the passenger-side airbag according to the detection result and the state setting signal comprises:
         if the detection result is that a signal of a child seat is detected and the state setting signal is a disabled signal, setting the passenger-side airbag as a disabled state;
         if the detection result shows that no signal of a child seat is detected and the state setting signal is a disabled signal, keeping an enabled state of the passenger-side airbag and outputting a prompt information of setting failure about being disabled;
         if the detection result shows that a signal of a child seat is detected and the state setting signal is an enabled signal, keeping a disabled state of the passenger-side airbag and outputting a prompt information of setting failure about being enabled;
         and if the detection result shows that no signal of a child seat is detected and the state setting signal is an enabled signal, setting the passenger-side airbag as an enabled state.

Optionally, the setting verification channel comprises a verification input window and a verification transmission channel, and the verification signal triggered by the verification input window is transmitted to an execution end through the verification transmission channel;
upon receiving the state setting signal of the functional component, displaying the verification input window on a touch display screen of a vehicle; and
detecting a signal of the verification transmission channel in real time.

Optionally, the state setting method of the functional component further comprises:
upon receiving a setting completion signal fed back based on responding to the state setting signal, outputting a prompt information corresponding to the setting completion signal to a touch display screen of a vehicle; and/or,
according to the setting completion signal, controlling an identification indicating state of the passenger-side airbag on a dashboard of the vehicle to display a prompt of a corresponding state.

Optionally, the state setting method of the functional component further includes:
upon receiving the verification signal, starting timing for a third preset time period, upon receiving the setting completion signal fed back based on responding to the state setting signal within the third preset time period, performing a step of outputting the prompt information corresponding to the setting completion signal to the touch display screen of the vehicle, and/or a step of controlling the identification indicating state of the passenger-side airbag on the dashboard of the vehicle according to the setting completion signal to display the prompt of the corresponding state.

The present invention further provides a state setting device of a passenger-side airbag, the state setting device of passenger-side airbag includes a touch screen display, a state setting module, an automotive domain control unit, and an airbag control module;
the state setting module is configured to set a state of the passenger-side airbag, generates a state setting signal and a verification signal through touch operations on the touch display screen, and transmits the state setting signal and the verification signal to the automotive domain control unit;
the automotive domain control unit is configured to send the state setting signal to the airbag control module upon receiving the state setting signal, and send the verification signal to the airbag control module upon receiving the verification signal within a first preset time period; and
the airbag control module is connected with the automotive domain control unit and the passenger-side airbag, respectively, and is configured to receive the state setting signal and set the state of the passenger-side airbag according to the state setting signal upon receiving the verification signal within a second preset time period.

Optionally, the state setting module includes:
a state setting control, used for generating the state setting signal through the touch operation on the touch display screen and transmitting the state setting signal to the automotive domain control unit; and
a setting verification control, configured to display the state setting signal on the touch display screen when the state setting control generates the state setting signal, and transmit the verification signal to the automotive domain control unit when generating the verification signal through the touch operation on the touch display screen within the first preset time period.

Optionally, the automotive domain control unit includes a battery state management module and a processing module, wherein the battery state management module is connected with the state setting module, and the processing module is connected with the battery state management module and the airbag control module, respectively;
the battery state management module is configured to send the state setting signal to the processing module upon receiving the state setting signal, and send the verification signal to the processing module upon receiving the verification signal within the first preset time period; and
the processing module is configured to send the state setting signal to the airbag control module upon receiving the state setting signal, and send the verification signal to the airbag control module upon receiving the verification signal within the first preset time period.

Optionally, the state setting device of the passenger-side airbag further includes a prompt module connected with the automotive domain control unit;
the airbag control module is further configured to feed back a setting completion signal to the automotive domain control unit after successfully setting the state of the passenger-side airbag;
the automotive domain control unit is further configured to output a setting completion prompt instruction upon receiving the setting completion signal; and
the prompt module is configured to output a prompt information corresponding to the setting completion prompt instruction upon receiving the setting completion prompt instruction fed back by the automotive domain control unit.

Optionally, the state setting device of the passenger-side airbag further includes a timing module connected with the automotive domain control unit and configured to start timing for a third preset time period based on the automotive domain control unit receiving the verification signal within the first preset time period; and
the automotive domain control unit is further configured to output an expected setting completion prompt instruction upon receiving the setting completion signal within the third preset time period, and output an unexpected setting completion prompt instruction upon receiving the setting completion signal after the timing of the third preset time period expires.

Optionally, the prompt module is arranged on the touch display screen, and/or the prompt module is arranged on a dashboard of a vehicle.

Optionally, the state setting device of the passenger-side airbag further includes a front passenger detection module connected with the automotive domain control unit or the airbag control module and configured to send a detection result of a child seat on a passenger-side seat to the automotive domain control unit or the airbag control module.

The present invention further provides a vehicle including a cab, a passenger-side seat arranged in the cab, a passenger-side airbag, and the state setting device of the passenger-side airbag as described above;
the passenger-side airbag is arranged in front of the passenger-side seat;
the state setting device is connected with the passenger-side airbag and configured to set a state of the passenger-side airbag; and
a touch display screen of the state setting device is arranged in the cab and configured to set the state of the passenger-side airbag through the touch display screen.

Optionally, a front passenger detection module of the state setting device is installed on the passenger-side seat for detecting a child seat on the passenger-side seat.

In the technical solution of the present invention, the state setting module is integrated into the touch display screen, and the verification of the state setting signal is triggered when the state setting module generates the state setting signal, and the state setting signal is responded to after the verification signal is successfully verified by the automotive domain control unit and the airbag control module based on the verification signal. In this way, the physical button for state setting is canceled and integrated into the touch display screen, thereby ensuring the safety attributes/property of the state setting module on the touch display screen, avoiding the airbag control module from responding to false triggering instructions, and increasing functional safety.

### BRIEF DESCRIPTION OF THE DRAWINGS

In order to explain the technical solutions in the embodiments of the present invention or in the prior art more clearly, drawings necessary for describing the embodiments or the prior art will be briefly introduced below, apparently, the following described drawings are merely some embodiments of the present invention, for those ordinary skilled in the art, it is possible to obtain other drawings based on these drawings without paying any creative effort.
FIG. 1 is a structural schematic diagram of a state setting device of a passenger-side airbag according to an embodiment of the present invention;
FIG. 2 is a schematic flowchart of a state setting method of a functional component according to a first embodiment of the present invention;
FIG. 3 is a schematic flowchart of a state setting method of the functional component according to a second embodiment of the present invention; and
FIG. 4 is a detailed schematic flowchart of step S220 in a state setting method of the functional component according to a third embodiment of the present invention.

### Explanation of Reference numerals:

| | | | |
|---|---|---|---|
| 1 | Automotive domain control unit | 11 | Battery state management module |
| 12 | Processing module | 13 | Timing module |
| 2 | Touch display screen | 3 | State setting module |
| 31 | State setting control | 32 | Setting validation control |
| 4 | Airbag control module | 41 | Memory |
| 5 | Prompt module | 6 | dashboard |

An implementation of the present invention, and features and advantages of the functional component will be further explained with reference to the drawings in conjunction with the embodiments.

### DETAILED DESCRIPTION OF EXEMPLARY EMBODIMENTS

Technical solutions of embodiments of the present invention will be described clearly and completely below in conjunction with the drawings in the embodiments of the present invention. Apparently, the described embodiments are merely a part rather than all of the embodiments of the present invention. Based on the embodiments of the present invention, all the other embodiments obtained by those skilled in the art without paying any creative effort are still within the scope of the present invention.

It should be noted that if the embodiments of the present invention involve directional indications (such as up, down, left, right, front, rear, etc.), the directional indications are only used to explain the relative position relationship and motion between the various components in a specific posture (as shown in the figure). If the specific posture is changed, the directional indications will be changed accordingly.

In addition, if there are descriptions of "first", "second" and the like in the embodiments of the present invention, the descriptions of "first", "second" and the like are only used for purposes of description and are not construed as an indication or implication of relative importance or an implicit indication of the number of indicated technical features. Therefore, a feature defined by "first" or "second" may explicitly or implicitly include at least one such feature. In addition, the meaning of "and/ or" in the description includes three parallel schemes. Taking "A and/or B" as an example, "A and/or B" includes a scheme A, or a scheme B, or a scheme of both A and B. In addition, technical solutions in various embodiments may be combined with each other, provided that the combination can be implemented by a person ordinary skilled in the art. When combined technical solutions are contradictory or cannot be implemented, it should be considered that this combination of technical solutions does not exist.

With the trend of intelligence, in order to achieve aesthetics, many physical buttons have been integrated into a display screen. However, a touch display screen may be easy to be falsely touched, resulting in lower safety of the display screen; for some physical buttons with low safety requirements, the physical functions are canceled and integrated into the display screen, thus the functionality of the buttons is sacrificed. As for the setting of the disabled and enabled states of the vehicles safety airbag, their safety functions cannot be ignored. Therefore, the industry can only employ the control manner of physical button and cannot integrate it into the display screen for control.

In order to solve the above problems, embodiments of the present invention propose a state setting device of passenger-side airbag, which eliminates the physical button and integrates it into the display screen for control, and ensures the safety for setting a state of the safety airbag.

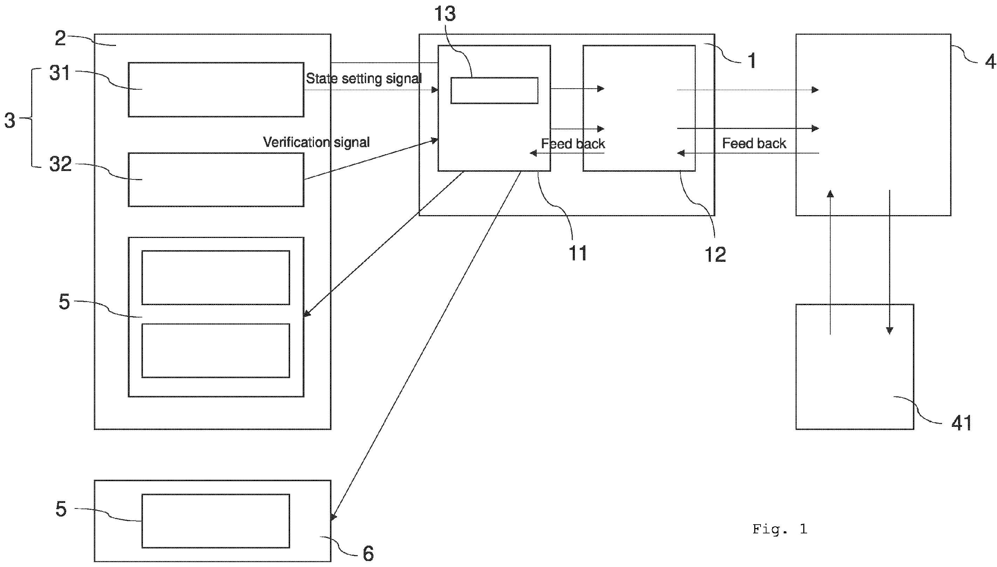

Specifically, with reference to FIG. 1, a state setting device of a passenger-side airbag includes a touch display screen 2, a state setting module 3, an automotive domain control unit 1, and an airbag control module 4. Optionally, the touch display screen 2 is a display screen inside a vehicle cab, and the touch display screen 2 has a touch function, so that users can input control instructions/control information through the touch display screen 2. Alternatively, the touch display screen 2 also has a voice capture function, so that the users can input control voice through the touch display screen 2.

Optionally, the state setting module 3 is used to set the state of the passenger-side airbag. The state of the passenger-side airbag includes an enabled state and a disabled state. When the safety airbag is in the enabled state, the safety airbag is deployed in the event of collision to protect the front passenger; and when the safety airbag is in the disabled state, the safety airbag is not deployed and maintains unused in the event of collision.

This embodiment integrates the setting switch of the passenger-side airbag into the touch display screen 2, and triggers the setting of state of the passenger-side airbag through the touch display screen 2. Optionally, if the physical switch is provided as the state setting module 3 and integrated into the touch display screen 2, then the state setting module 3, through a touch operation on the touch display screen 2, generates a state setting signal by which the state of the passenger-side airbag is set. Optionally, the touch display screen 2 is a large screen inside the vehicle cab, and a main driver or the front passenger can perform control based on the touch display screen 2.

In this embodiment, in order to increase the touch safety of the touch display screen 2 and avoid the state setting module 3 being falsely triggered, when the state setting module 3 generates the state setting signal through the touch operation on the touch display screen 2, the state setting module 3 displays a verification window through the touch display screen 2 for the user to touch-control. The state setting module 3 also generates a verification signal through the touch operation on the touch display screen 2, and transmits the verification signal to the automotive domain control unit 1. The verification signal is used to verify whether the state setting signal is truly valid or falsely triggered. Optionally, in this embodiment, valid time of the verification window of the touch display screen 2 can be set as a first preset time period. In a case where the user triggers the verification window within the first preset time period, the state setting module 3 generates the verification signal and can transmit it to the automotive domain control unit 1; and in a case where the user fails to trigger the verification window beyond the first preset time period, the verification window will close and the user will no longer be able to trigger the verification window, as a result, the state setting module 3 will not generate the verification signal. If the state setting signal is falsely triggered by the user, the probability of triggering the verification window again within the first preset time period is extremely low, thereby achieving safety control of false triggering. Optionally, in other embodiments, the verification window of the touch display screen 2 can be set to remain valid until the end of this setting (i.e., the valid time is greater than the first preset time period), and the user can trigger the verification window at any time. The state setting module 3 generates verification information when the verification window is triggered and transmits it to the automotive domain control unit 1. In this case, it can be verified by the automotive domain control unit 1 whether the state setting signal is falsely triggered.

Optionally, the automotive domain control unit 1 is configured to receive the state setting signal, and determine that verification of the state setting signal is successful when the automotive domain control unit 1 receives the verification signal within the first preset time period.

Optionally, the automotive domain control unit 1 processes signals transmitted by the state setting module 3 as follows: when the automotive domain control unit 1 receives the state setting signal, the automotive domain control unit 1 sends the state setting signal to the airbag control module 4 and simultaneously starts timing (either forward or reverse); and if a verification signal is received again within the first preset time period, it is determined that the verification at an automotive domain controller side has passed and the verification signal is sent to the airbag control module 4. If the verification signal is received exceeding the first preset time period, it is determined that the verification at the automotive domain controller side has not passed, and the verification signal will not be sent to the airbag control module 4. As a result, a safety airbag state setting channel will be closed and the state of the safety airbag cannot be set. It can be prevented that the state setting signal falsely triggered by the user is responded so as to falsely set the airbag state, and thus the safety for setting the state of the airbag is increased.

Optionally, the airbag control module 4 is connected with the automotive domain control unit 1 and the passenger-side airbag, respectively. The airbag control module 4 is configured to receive the state setting signal, and set the state of the passenger-side airbag according to the state setting signal when the verification signal is received within a second preset time period.

The airbag control module 4 is used to control the state of the airbag, for example, the airbag control module 4 controls the airbag to be in the enabled state or controls the airbag to be in the disabled state. Optionally, in some embodiments, when the airbag control module 4 receives the state setting signal, it is also required to verify the authenticity of the state setting signal through the verification signal, so as to further improve the control for setting the state of the safety airbag. The airbag control module 4 verifies the authenticity by verifying whether a time interval between the time of receiving the state setting signal and the time of receiving the verification signal meets the second preset time period. As a result, even if there is an error in the verification in the automotive domain control unit 1, the safety of the airbag state setting can be further increased based on re-verifying the authenticity of the state setting signal by the airbag control module 4.

Optionally, the first preset time period and the second preset time period generally are configured to be the same, however, in specific circumstances, the first preset time period and the second preset time period may also be configured differently as required.

Optionally, the first preset time period may be timed based on a timing module 13 of the automotive domain control unit 1 itself (which may be shared or not shared with a third preset time period mentioned below for timing), or through a peripheral timing module. Similarly, the second preset time period may also be timed based on a timing module of the airbag control module 4 itself, or through a peripheral timing module. Optionally, the timing module communicates with the touch display screen 2 to display a timing process of the timing module on the display screen.

Or, in other embodiments, the airbag control module 4 may not require verification and can directly set the state of the passenger-side airbag upon receiving the state setting signal.

The setting of the state of the passenger-side airbag also is meant to a modification of the state. If the passenger-side airbag is set to be in the disabled state, the passenger-side airbag will be changed from the enabled state to the disabled state; and if the passenger-side airbag is set to be in the enabled state, the passenger-side airbag will be changed from the disabled state to the enabled state.

Optionally, in some embodiments, the setting of state of the passenger-side airbag can be achieved by modifying a control switch of the passenger-side airbag, and also by modifying a control program of the passenger-side airbag.

In this embodiment, the state setting module 3 is integrated into the touch display screen 2, the verification of the state setting signal is triggered when the state setting module 3 generates the state setting signal, and the state setting signal is responded to after the state setting signal is successfully verified based on the verification signal by the automotive domain control unit 1 and the airbag control module 4. As a result, the cancellation of the physical button and the integration of the physical button for state setting into the touch display screen 2, ensures the safety property of the state setting module 3 on the touch display screen 2 and avoids the airbag control module 4 responding to falsely triggering instructions.

In some optional embodiments, the state setting module 3 includes a state setting control 31 and a setting verification control 32.

The state setting control 31 is displayed on the touch display screen 2, and the user can trigger the state setting control 31 by touching the touch display screen 2, so that the state setting control 31 generates the state setting signal. The state setting control 31 is connected with the automotive domain control unit 1. After generating the state setting signal, the state setting control 31 transmits the state setting signal to the automotive domain control unit 1 for performing the state setting signal by the automotive domain control unit 1.

The setting verification control 32 is connected in communication with the state setting control 31. When the state setting control 31 generates the state setting signal, it triggers the setting verification control 32 to cause the setting verification control 32 to be displayed on the touch display screen 2.

In this embodiment, when the setting verification control 32 is triggered, the setting verification control 32 is displayed on the touch display screen 2 (for example, displaying an input window of the setting verification control 32 on the display screen, or displaying an identification of the setting verification control 32, such as text, icon, video or audio, etc.). When the setting verification control 32 is displayed on the touch display screen 2, the user can trigger the setting verification control 32 by the touch-control of the touch display screen 2, and the setting verification control 32 will generate the verification signal. The setting verification control 32 is connected with the automotive domain control unit 1 and transmits the verification signal to the automotive domain control unit 1.

In this embodiment, in order to increase the safety for setting the passenger-side airbag, a valid period of the verification signal generated by the setting verification control 32 is configured. If the user triggers the setting verification control 32 within the first preset time period after triggering the state setting control 31, a time interval between generation of the state setting signal and generation of the verification signal is less than or equal to the first preset time period. In this way, under normal communication between the state setting module 3 and the automotive domain control unit 1, the automotive domain control unit 1 will receive the verification signal within the first preset time period after receiving the state setting signal. In this way, the automotive domain control unit 1 can determine that the state setting signal is the user's desired setting.

In this embodiment, the setting state is manually confirmed again by the state setting control 31 and the setting verification control 32, and then the passenger-side airbag is set by the system, thereby increasing the safety for setting the state of the passenger-side airbag and compensating for the unsafe defect caused by the touch-control on the display screen.

In some optional embodiments, the automotive domain control unit 1 includes a battery state management module 11 and a processing module 12. The battery state management module 11 is connected with the state setting module 3, and the processing module 12 is respectively connected with the battery state management module 11 and the airbag control module 4.

The battery state management module 11 is configured to send the state setting signal to the processing module 12 upon receiving the state setting signal; and send the verification signal to the processing module 12 upon receiving the verification signal within the first preset time period.

The processing module 12 is configured to send the state setting signal to the airbag control module 4 upon receiving the state setting signal; and send the verification signal to the airbag control module 4 upon receiving the verification signal within the first preset time period.

Optionally, the processing module 12 is equivalent to a central processor.

When this embodiment is applied in the field of electric vehicle, the safety airbag can be controlled based on the battery state management module 11 combined with the vehicle's usage to increase the safety for setting the state of the safety airbag.

In an optional embodiment, the state setting device of passenger-side airbag further includes a prompt module 5 connected with the automobile domain control unit 1.

The airbag control module 4 is also configured to feed back a setting completion signal to the automotive domain control unit 1 after successfully setting the state of the passenger-side airbag.

The automotive domain control unit 1 is further configured to output a setting completion prompt instruction upon receiving the setting completion signal.

The prompt module 5 is configured to output a prompt information corresponding to the setting completion prompt instruction upon receiving the setting completion prompt instruction fed back by the automotive domain control unit 1.

In this embodiment, after setting the state of the passenger-side airbag, the airbag control module 4 feeds back the setting completion signal, and the prompt module 5 performs a prompt information to prompt the user the current state of the passenger-side airbag. If the current state is not what the user expects, the user can also timely modify the state of the passenger-side airbag based on the prompt; and if the current state is what the user expects, the user will determine based on the prompt information that the state of the passenger-side airbag meets his own expectation and can drive safely.

Optionally, in this embodiment, the prompt module 5 can prompt the information on the setting completion prompt instruction, or the prompt information on the setting is not successful. If the airbag control module 4 does not set the state of the passenger-side airbag, non-setting completion signal will be fed back, and then the automotive domain control unit 1 will output a non-setting completion prompt instruction and the prompt module 5 will prompt a corresponding non-setting completion prompt information.

Optionally, in this embodiment, the prompt module 5 is arranged on the touch display screen 2, and/or the prompt module 5 is arranged on a dashboard 6 of the vehicle.

In a preferred embodiment, both the touch display screen 2 and the dashboard 6 of the vehicle are provided with prompt modules 5, and the prompt modules 5 at the two positions are independently connected with the automotive domain control unit 1. The prompt information is transmitted through two communication links, and if one of the two links fails or is delayed, the other link can be used to timely prompt the user the setting of the passenger-side airbag, thereby increasing the setting effect of the touch display screen 2 and improving the user experience.

In an optional embodiment, the device further includes a timing module 13 connected with the automotive domain control unit 1, and configured to start timing for a third preset time period based on a time that the automotive domain control unit 1 receives the verification signal within the first preset time period.

The automotive domain control unit 1 is further configured to output an expected setting completion prompt instruction upon receiving the setting completion signal within the third preset time period; and to output an unexpected setting completion prompt instruction upon receiving the setting completion signal after the timing for the third preset time period expires.

In this embodiment, according to the speed of responding to the state setting signal by the airbag control module 4 and a length of time for normally feeding back the setting completion signal, a time limit from receiving the verification signal to receiving the fed back setting completion signal is set. If the time limit is exceeded, the state setting signal may not be expected by the user, and corresponding prompt information is output to prompt the user for timely detection. Based on this, the automotive domain control unit 1 in this embodiment determines whether the state setting signal is an expected modification based on the time interval between the receiving of the setting completion signal and that of the verification signal. If the state setting signal is not the expected modification, the user is prompted that the modification is an unexpected one. If the state setting signal is the expected modification, the user is prompted that the system has completed the modification as expected. Thus, the safety for setting the state is increased.

Optionally, in some embodiments, in order to further increase the safety for setting the state of the passenger-side airbag and avoid mismatch between the set state and the safety protection of the front passenger, for example, when the user sets the disabled state but the front passenger is an adult, or when the user sets the enabled state but the front passenger is a child seat. Therefore, the device proposed in this embodiment further includes a front passenger detection module connected with the automotive domain control unit 1 or the airbag control module 4, and configured to send a detection result of the child seat on the passenger-side seat to the automotive domain control unit 1 or the airbag control module 4.

Alternatively, in some embodiments, the front passenger detection module is connected with the automotive domain control unit 1, and the state setting module 3 is triggered to automatically generate the state setting signal through the automotive domain control unit 1, thereby automatically triggering the state setting. When a child seat is detected on the passenger-side seat, the state setting module 3 is triggered to set the airbag to be disabled. When no child seat is detected on the passenger-side seat, the state setting module 3 is triggered to set the airbag to be enabled.

The front passenger detection module is used to detect whether there is a child seat on the passenger-side seat, and the corresponding detection results include having a child seat and no having a child seat.

The automotive domain control unit 1 or airbag control module 4 sets the state of the passenger-side airbag in combination with the detection result and the state setting signal. If there is a child seat on the passenger-side seat and the state setting signal indicates that the state of the passenger-side airbag is set to be disabled, the passenger-side airbag will be set to be disabled accordingly. If there is a child seat on the passenger-side seat and the state setting signal indicates that the state of the passenger-side airbag is set to be enabled, such state setting signal will not be responded to and the passenger-side airbag will be kept to be disabled. On the contrary, if there is no child seat on the passenger-side seat and the state setting signal indicates that the state of the passenger-side airbag is set to be disabled, such state setting signal will not be responded to and the passenger-side airbag will be kept to be enabled to protect the safety of the passenger; and if there is no child seat on the passenger-side seat and the state setting signal indicates that the state of the passenger-side airbag is set to be enabled, the passenger-side airbag will be set to be enabled accordingly. Thus, the safety for setting the state of the passenger-side airbag is increased.

Optionally, the state setting device further includes a memory 41 connected with the airbag control module 4.

It can be understood that the state data of the airbag is stored by the memory 41, and when the state setting module 3 of the airbag is triggered, the state of the airbag is set based on the last successful setting state by the user.

Based on the above various embodiments, the present invention also proposes out a vehicle including a cab, a passenger-side seat arranged in the cab, a front passenger(seat) airbag, and the state setting device of the passenger-side airbag as described above. For the specific structure of the state setting device of the passenger-side airbag, reference is made to the above embodiments.

The passenger-side airbag is arranged in front of the passenger-side seat.

The state setting device is connected with the passenger-side airbag and configured to set the state of the passenger-side airbag.

The touch display screen 2 of the state setting device is arranged in the cab and configured to set the state of the passenger-side airbag through the touch display screen 2.

Optionally, the front passenger detection module of the state setting device is installed on the passenger-side seat for detecting the child seat on the passenger-side seat.

When the user needs to modify the state (enabled/disabled) of the airbag at the position of the passenger-side seat, the user can touch the region of the touch display screen 2 corresponding to the state setting module 3 to trigger the state setting module 3. After receiving the operation instruction from the touch display screen 2, the state setting module 3 sends the corresponding state modification signal to the automotive domain control unit 1. The automotive domain control unit 1 sends the corresponding state modification signal to the airbag control module 4. After receiving the state modification signal, the airbag control module 4 modifies and sets the state of the airbag. At the same time, the airbag control module 4 feeds back the state information of the airbag to the automotive domain control unit 1. The automotive domain control unit 1 sends a prompt information corresponding to the state information to the prompt module 5, and the prompt module 5 displays the prompt information on the touch display screen 2 or on the dashboard 6.

It can be understood that in this embodiment, regardless of whether the modification of the state of the airbag is successful or not, the touch display screen 2 will display the current state of the airbag, so that the user can know the current state of the airbag.

Furthermore, in this embodiment, even if the user does not issue an operation instruction, the automotive domain control unit 1 still receives a feedback information from the airbag control module 4 in real time. Once the state information fed back from the airbag control module 4 changes and is not modified by the user, the prompt information is still sent, thereby increasing the functional safety.

Since the state setting device in the vehicle of this embodiment adopts all the technical solutions of the above all embodiments, the vehicle of this embodiment at least has all the beneficial effects brought about by the technical solutions of the above embodiments, which will not be repeated herein. The state setting device of the passenger-side airbag is located in a vehicle body.

It can be understood that the state setting device of the passenger-side airbag is provided so that it can facilitate users to control the deploying or disabling of the passenger-side airbag through the touch display screen 2.

Optionally, in the embodiments of the present invention, after the button for the state setting function of the passenger-side airbag is integrated into the touch display screen, the verification can be configured on an electronic system structure to increase the safety performance. It can also be combined with program control to integrate the button for the state setting function of the passenger-side airbag into the touch screen display without losing safety property. Optionally, in addition to the button for the state setting function of the passenger-side airbag, other buttons for state setting of the functional component with safety property can also be integrated into the display screen through the implementation of the embodiments of the present invention, that is, this button for the functional component with safety property is integrated into the touch display screen, which is also within the scope of protection of the present invention.

The button for the state setting of the functional component with safety property is integrated into the touch display screen, which is listed by several embodiments below in conjunction with a process of the program control.

### First embodiment

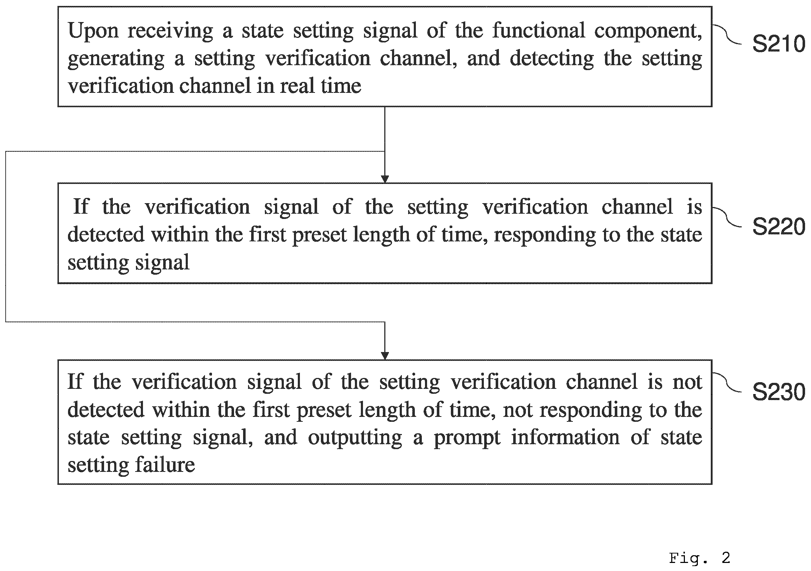

As shown in FIG. 2, in this embodiment, a state setting method of the functional component includes:
Step S210 when a state setting signal of the functional component is received, generating a setting verification channel, and detecting the setting verification channel in real time.

The explanation is made by taking this embodiment being applied to the state setting device of the passenger-side airbag described above as an example(the explanation is also made by taking the functional component being the passenger-side airbag as an example below). The state setting device is combined to control the state setting of the passenger-side airbag. The state setting device includes a touch screen display, a state setting module, an automotive domain control unit, and an airbag control module. The touch display screen is used to trigger the state setting module to generate a state setting signal, and the automotive domain control unit is used to control the airbag control module to set the state of the passenger-side airbag.

An execution subject of this embodiment can be the state setting device or the automotive domain control unit in the state setting device. An explanation is made below by taking the execution subject being the automotive domain control unit and an execution end being the airbag control module as an example.

When the user triggers the state setting module to generate the state setting signal by touching the display screen, the state setting signal is received. In this case, the generation of the verification channel is triggered. In this embodiment, the setting verification channel includes a verification input window and the verification transmission channel, and the verification signal triggered by the verification input window is transmitted to the execution end through the verification transmission channel.

In this embodiment, after the state setting module generates the state setting signal, the state setting module will trigger a verification program for the state setting signal to verify whether the triggered state setting signal is the user's expected setting signal. The verification program includes: the verification input window is displayed on the touch display screen of the vehicle; and the user can input a confirmation instruction through the verification input window, the verification signal is generated accordingly, and the verification signal is then transmitted to the execution end through the verification transmission channel.

In this embodiment, the verification transmission channel includes a first verification transmission channel between the setting verification module on the touch display screen and the automotive domain control unit, and a second verification transmission channel between the automotive domain control unit and the airbag control module. The verification signal is transmitted from the touch display screen to the automotive domain control unit, and then transmitted from the automotive domain control unit to the airbag control module.

In this embodiment, the state setting signal of the functional component is received and the signal in the verification transmission channel is detected in real time. If the verification signal is detected in the verification transmission channel, it is determined that the user has input a confirmation instruction from the verification input window. If no verification signal is detected, it is determined that the user has not input a confirmation instruction from the verification input window, indicating that the state setting signal is falsely triggered. Thus, the state setting signal will not be responded to.

Step S220; if the verification signal of the setting verification channel is detected within the first preset time period, responding to the state setting signal.

Step S230; if the verification signal of the setting verification channel is not detected within the first preset time period, not responding to the state setting signal, and outputting a prompt information of state setting failure.

In this embodiment, in order to further increase the safety property for setting the state of the passenger-side airbag, the valid time limit for the verification signal is set. If the valid time limit is the first preset time period, the first preset time period is used to limit the time interval between a time of the state setting signal and a time of the verification signal passing through the setting verification channel, respectively. When the time interval is limited less than or to be equal to the first preset time period, the state setting signal is valid and responded to.

Optionally, the verification signal is transmitted to the automotive domain control unit through the first verification transmission channel, and then transmitted to the airbag control module through the second verification transmission channel.

This embodiment can verify the state setting signal when the verification signal is detected in the first verification transmission channel. For example, after the verification input window is displayed on the touch display screen, the user needs to input a confirmation instruction for verification within the first preset time period. Only in a case where the confirmation instruction is input within the first preset time period, the verification is successful, and then the state setting signal is responded to. In a case where no confirmation instruction is input within the first preset time period, the verification is unsuccessful and the state setting signal is not responded to. If the time interval between a time of the state setting signal and a time of the verification signal passing through the first verification transmission channel respectively is less than or equal to the first preset time period, the state setting signal is valid (i.e., if the verification signal of the setting verification channel is detected within the first preset time period, the state setting signal is responded to).

This embodiment can also verify the state setting signal when the verification signal is detected in the second verification transmission channel. For example, when the automotive domain control unit receives the state setting signal transmitted by the state setting module, the automotive domain control unit transmits the state setting signal to the airbag control module; and when the automotive domain control unit receives the verification signal transmitted by the state setting module, the automotive domain control unit also transmits the verification signal to the airbag control module. The airbag control module determines the validity of the state setting signal by verifying the time interval between a time of the state setting signal and a time of the verification signal respectively passing through the second verification channel. The specific verification method is the same as the above method, both of which are within the second preset time period that can be equal to the first preset time period.

Based on this, when the state setting device is used as the executing subject, the step S220 includes verifying the verification signal of the first verification transmission channel between the touch display screen and the automotive domain control unit, and verifying the verification signal of the second verification transmission channel between the automotive domain control unit and the airbag control module, and responding to the state setting signal after the verification for both of them is successful.

In this embodiment, the state setting module is integrated into the touch display screen, the verification of the state setting signal is triggered when the state setting module generates the state setting signal, and the state setting signal is responded to after the state setting signal is successfully verified by the automotive domain control unit and the airbag control module based on the verification signals. In this way, as for the cancellation of the physical button and integration of the physical button for state setting into the touch display screen, the present invention ensures the safety property of the state setting module on the touch display screen and avoids the airbag control module responding to falsely triggering instructions.

### Second embodiment

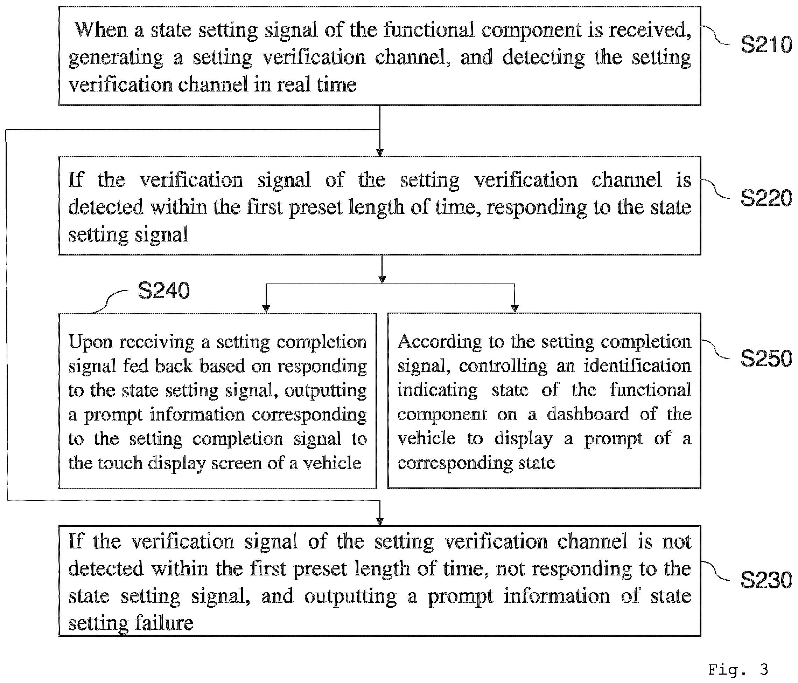

This embodiment is based on the first embodiment described above. In this embodiment, as shown in FIG. 3, the state setting method of the functional component further includes:
Step S240; when a setting completion signal fed back based on responding to the state setting signal is received, outputting a prompt information corresponding to the setting completion signal to the touch display screen of the vehicle; and/or,
Step S250; according to the setting completion signal, controlling an identification indicating state of the functional component on the dashboard of the vehicle to display a prompt of the corresponding state.

An example is taken by using the functional component to be the passenger-side airbag:
In this embodiment, after setting the state of the passenger-side airbag, the airbag control module feeds back the setting completion signal to the automotive domain control unit, and the airbag control module feeds back the setting completion signal to the touch display screen and/or the dashboard of the vehicle, and the setting information is prompted on the touch screen and/or the dashboard of the vehicle.

In a preferred embodiment, the prompt information is transmitted to the touch display screen and to the dashboard of the vehicle, and the setting completion information is transmitted through two links. The prompt is given in two ways, allowing the user to know the setting of the passenger-side airbag more easily and timely.

Optionally, the prompt information output by the touch display screen includes current state identification of the passenger-side airbag and/or safety instructions for the use of front passenger's seat. The output manner of the prompt information includes at least one of text, image, video, and voice.

Optionally, the prompt information output by the dashboard includes identification information for the state. It can be prompted through flashing, lighting, and the like.

Optionally, in some embodiments, according to the speed of responding to the state setting signal by the airbag control module and a length of time for normally feeding back the setting completion signal, a time limit from receiving the verification signal to receiving the fed back setting completion signal is set. If the time limit is exceeded, the state setting signal may not be expected by the user, and corresponding prompt information is output to prompt the user for timely detection.

Specifically, the state setting method of the functional component also includes:
When the verification signal is received, timing for a third preset time period is started; when the setting completion signal fed back based on responding to the state setting signal is received within the third preset time period, the step of outputting the prompt information corresponding to the setting completion signal to the touch display screen of the vehicle is performed, and/or the step of controlling the identification indicating state of the functional component on the dashboard of vehicle according to the setting completion signal to display a prompt of the corresponding state is performed.

If the third preset time period is exceeded, a prompt information will be displayed that the state setting signal is not expected by the user.

For example, if the state setting signal is one that is expected by the user, the user will timely perform the confirmation operation when the verification window is displayed on the touch display screen. In this way, if the time interval between the state setting signal and the verification signal is relatively short, the corresponding prompt information can be quickly displayed on the touch display screen or dashboard. Accordingly, if the time interval between the verification signal and the fed back setting completion signal is within the third preset time period, it is determined that it is the state setting expected by the user. Conversely, if it takes a relatively long time to verify and confirm in the automotive domain control unit or airbag control module, the time interval between the verification signal and the fed back setting completion signal is relatively long, that is, being longer than the third preset time period, it is determined that it is the state setting not expected by the user.

This embodiment ensures that the state setting information is the user's current expected modification by setting validity of time between signals, and displays corresponding prompt information to prompt the user whether the modification result is consistent with the expectation. If it is not the user's current expected modification, the prompt information of corresponding unexpected modification is displayed to facilitate timely correction by the user.

### Third Embodiment

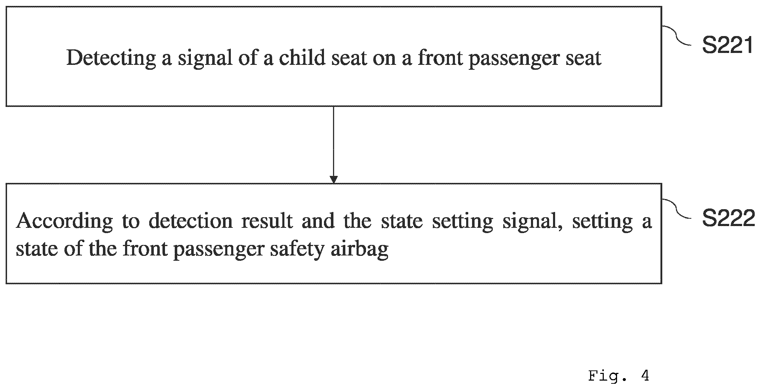

This embodiment is based on all the above embodiments, and control is performed in conjunction with the seat signal on the passenger-side seat when the functional component is the passenger-side airbag. As shown in FIG. 4, steps of responding to the state setting signal include:
Step S221, detecting the signal of a child seat on the passenger-side seat;
Step S222, setting the state of the passenger-side airbag based on a detection result and the state setting signal.

It should be noted that when a child seat is installed on the passenger-side seat, in order to avoid injury to the child in the child seat when the airbag is deployed, the airbag needs to be disabled. In other usage scenarios, the airbag needs to be enabled to protect the passengers safety.

In order to avoid the situation where there is no child safety seat on the passenger-side seat but the user falsely sets the safety airbag disabled, or where there is a child seat on the passenger-side seat but the user sets the safety airbag enabled, this embodiment employs the detection of the child seat on the passenger-side seat, and sets the state of the passenger-side airbag based on the combination of the detection result and state setting signal, so as to further increase the safety property of the state setting of the touch display screen.

Optionally, the step of setting the state of the passenger-side airbag based on the detection result and the state setting signal includes but is not limited to the following processes:
If the detection result shows that a signal of a child seat is detected and the state setting signal is a disabled signal, the passenger-side airbag is set as a disabled state; and
If the detection result shows that the signal of a child seat is not detected and the state setting signal is a disabled signal, the enabled state of the passenger-side airbag is kept and a prompt information of the setting failure about being disabled is output.
If the detection result shows that the signal of a child seat is detected and the state signal is an enabled signal, the disabled state of the passenger-side airbag is kept and a prompt information of the setting failure about being enabled is output; and
If the detection result shows that the signal of a child seat is not detected and the state signal is the enabled signal, the passenger-side airbag is set as the enabled state.

This embodiment can make the state setting of the passenger-side airbag consistent with the safe usage state of the passenger-side seat, thereby avoiding dangerous manual operations.

Or, in some embodiments, the front passenger detection module is connected with the automotive domain control unit, the state setting module is triggered by the automotive domain control unit to automatically generate the state setting signal, thereby automatically triggering the state setting. When a child seat is detected on the passenger-side seat, the state setting module is triggered to set the airbag to be disabled. When no child seat is detected on the passenger-side seat, the state setting module is triggered to set the airbag to be enabled.

In this embodiment, the method further includes:
detecting whether there is a signal of a child seat on the passenger-side seat or not;
If it is detected that there is a signal of a child seat on the passenger-side seat, determining whether the current state of the passenger-side airbag of the vehicle is enabled or not;
If it is determined that the current state of the passenger-side airbag of the vehicle is enabled, generating a state setting signal indicating disabled, and then starting to perform step S210;
If it is determined that the current state of the passenger-side airbag of the vehicle is disabled, maintaining the current state.
On the contrary, if it is determined that there is no signal of child seat and the current state is enabled, the current state is maintained;
If the current state is disabled, generating a state setting signal indicating that it is enabled, and then starting to perform the step S210.

In this way, the state of the passenger-side airbag can be automatically switched according to the state of the child seat on the passenger-side seat. Although automation is more in line with the development of intelligence, manual triggering by users more meets their expectations.

Optionally, embodiments of the present invention also provide a vehicle including: a memory, a processor, and a state setting program stored on the memory and executable on the processor. When the state setting program is executed by the processor, various embodiments of the state setting method for the above functional components are implemented.

The foregoing description is merely optional embodiments of the present invention and therefore is not intended to limit the patent scope of the present invention. The invention is defined by appended claims.

## Claims

1. A state setting method of a functional component, wherein the state setting method of the functional component comprises:
(S210) upon receiving a state setting signal of the functional component, generating a setting verification channel and monitoring the setting verification channel in real time;
according to whether a verification signal of the setting verification channel is detected within a first preset time period, the state setting method of the functional component further comprising:
(S220) responding to the state setting signal, if the verification signal of the setting verification channel is detected within the first preset time period; and
(S230) outputting prompt information of state setting failure and not responding to the state setting signal, if the verification signal of the setting verification channel is not detected within the first preset time period,
wherein the functional component is a passenger-side airbag, and the step of responding to the state setting signal comprises:
(S221) detecting a signal of a child seat on a passenger-side seat; and
setting the state of the passenger-side airbag according to a detection result and the state setting signal, wherein the step of setting the state of the passenger-side airbag according to the detection result and the state setting signal comprises:
if the detection result is that a signal of a child seat is detected and the state setting signal is a disabled signal, setting the passenger-side airbag as a disabled state;
if the detection result shows that no signal of a child seat is detected and the state setting signal is a disabled signal, keeping an enabled state of the passenger-side airbag and outputting prompt information of setting failure about being disabled;
if the detection result shows that a signal of a child seat is detected and the state setting signal is an enabled signal, keeping a disabled state of the passenger-side airbag and outputting prompt information of setting failure about being enabled; and
if the detection result shows that no signal of a child seat is detected and the state setting signal is an enabled signal, setting the passenger-side airbag as an enabled state.

2. The state setting method of the functional component as claimed in claim 1, **characterized in that**, the setting verification channel comprises a verification input window and a verification transmission channel, and the verification signal triggered by the verification input window is transmitted to an execution end through the verification transmission channel;
a step of upon receiving the state setting signal of the functional component, generating the setting verification channel and detecting the setting verification channel in real time comprises:
upon receiving the state setting signal of the functional component, displaying the verification input window on a touch display screen (2) of a vehicle; and
monitoring a signal of the verification transmission channel in real time.

3. The state setting method of the functional component as claimed in claim 1, **characterized in that**, the state setting method of the functional component further comprises:
(S240) upon receiving a setting completion signal fed back based on responding to the state setting signal, outputting prompt information corresponding to the setting completion signal to a touch display screen (2) of a vehicle; and/or,
(S250) according to the setting completion signal, controlling an identification indicating state of the functional component on a dashboard (6) of the vehicle to display a prompt of a corresponding state.

4. The state setting method of the functional component as claimed in claim 3, **characterized in that**, the state setting method of the functional component further comprises:
upon receiving the verification signal, starting timing for a third preset time period, upon receiving the setting completion signal fed back based on responding to the state setting signal within the third preset time period, performing a step of outputting the prompt information corresponding to the setting completion signal to the touch display screen (2) of the vehicle, and/or a step of controlling the identification indicating the state of the functional component on the dashboard (6) of the vehicle according to the setting completion signal to display the prompt of the corresponding state.

5. A state setting device of a passenger-side airbag, wherein
the state setting device of passenger-side airbag comprises a touch screen display, a state setting module (3), an automotive domain control unit (1), and an airbag control module (4);
the state setting module (3) is configured to set a state of the passenger-side airbag, generates a state setting signal and a verification signal through touch operations on the touch display screen (2), and transmits the state setting signal and the verification signal to the automotive domain control unit (1);
the automotive domain control unit (1) is configured to send the state setting signal to the airbag control module (4) upon receiving the state setting signal, and send the verification signal to the airbag control module (4) upon receiving the verification signal within a first preset time period; and
the airbag control module (4) is connected with the automotive domain control unit (1) and the passenger-side airbag, respectively, and is configured to receive the state setting signal and set the state of the passenger-side airbag according to the state setting signal upon receiving the verification signal within a second preset time period.

6. The state setting device of the passenger-side airbag as claimed in claim 5, **characterized in that**, the state setting module (3) comprises:
a state setting control (31), used for generating the state setting signal through the touch operation on the touch display screen (2) and transmitting the state setting signal to the automotive domain control unit (1); and
a setting verification control (32), configured to display the state setting signal on the touch display screen (2) when the state setting control (31) generates the state setting signal, and transmit the verification signal to the automotive domain control unit (1) when generating the verification signal through the touch operation on the touch display screen (2) within the first preset time period.

7. The state setting device of the passenger-side airbag as claimed in claim 5, **characterized in that**, the automotive domain control unit (1) comprises a battery state management module (11) and a processing module (12), wherein the battery state management module (11) is connected with the state setting module (3), and the processing module (12) is connected with the battery state management module (11) and the airbag control module (4), respectively;
the battery state management module (11) is configured to send the state setting signal to the processing module (12) upon receiving the state setting signal, and send the verification signal to the processing module (12) upon receiving the verification signal within the first preset time period; and
the processing module (12) is configured to send the state setting signal to the airbag control module (4) upon receiving the state setting signal, and send the verification signal to the airbag control module (4) upon receiving the verification signal within the first preset time period.

8. The state setting device of the passenger-side airbag as claimed in claim 5, **characterized in that**, the state setting device of passenger-side airbag further comprises a prompt module (5), connected with the automotive domain control unit (1);
the airbag control module (4) is further configured to feed back a setting completion signal to the automotive domain control unit (1) after successfully setting the state of the passenger-side airbag;
the automotive domain control unit (1) is further configured to output a setting completion prompt instruction upon receiving the setting completion signal; and
the prompt module (5) is configured to output prompt information corresponding to the setting completion prompt instruction upon receiving the setting completion prompt instruction fed back by the automotive domain control unit (1).

9. The state setting device of the passenger-side airbag as claimed in claim 8, **characterized in that**, the state setting device of passenger-side airbag further comprises a timing module (13) connected with the automotive domain control unit (1) and configured to start timing for a third preset time period based on the automotive domain control unit (1) receiving the verification signal within the first preset time period; and
the automotive domain control unit (1) is further configured to output an expected setting completion prompt instruction upon receiving the setting completion signal within the third preset time period, and output an unexpected setting completion prompt instruction upon receiving the setting completion signal after the timing of the third preset time period expires.

10. The state setting device of the passenger-side airbag as claimed in claim 8, **characterized in that**, the prompt module (5) is arranged on the touch display screen (2), and/or the prompt module (5) is arranged on a dashboard (6) of a vehicle.

11. The state setting device of the passenger-side airbag as claimed in claim 5, **characterized in that**, the state setting device of the passenger-side airbag further comprises a front passenger detection module connected with the automotive domain control unit (1) or the airbag control module (4) and configured to send detection result of a child seat on a passenger-side seat to the automotive domain control unit (1) or the airbag control module (4).

12. A vehicle, comprising a cab, a passenger-side seat arranged in the cab, a passenger-side airbag, and a state setting device of the passenger-side airbag according to any one of claims 5-11;
wherein the passenger-side airbag is arranged in front of the passenger-side seat;
the state setting device is connected with the passenger-side airbag and configured to set a state of the passenger-side airbag; and
a touch display screen (2) of the state setting device is arranged in the cab and configured to set the state of the passenger-side airbag through the touch display screen (2).

13. The vehicle as claimed in claim 12, **characterized in that**, a front passenger detection module of the state setting device is installed on the passenger-side seat for detecting a child seat on the passenger-side seat.

## Patentansprüche

1. Zustandseinstellungsverfahren einer Funktionskomponente, wobei das Zustandseinstellungsverfahren der Funktionskomponente umfasst:
(S210) nach dem Empfangen eines Zustandseinstellungssignals der Funktionskomponente, Generieren eines Einstellungsverifizierungskanals und Überwachen des Einstellungsverifizierungskanals in Echtzeit;
wobei das Zustandseinstellungsverfahren der Funktionskomponente in Abhängigkeit davon, ob ein Verifizierungssignal des Einstellungsverifizierungskanals innerhalb eines ersten voreingestellten Zeitraums detektiert wird, des Weiteren umfasst:
(S220) Reagieren auf das Zustandseinstellungssignal, falls das Verifizierungssignal des Einstellungsverifizierungskanals innerhalb des ersten voreingestellten Zeitraums detektiert wird; und
(S230) Ausgeben von Hinweisinformationen über einen Zustandseinstellungsfehler und Nichtreagieren auf das Zustandseinstellungssignal, falls das Verifizierungssignal des Zustandsverifizierungskanals nicht innerhalb des ersten voreingestellten Zeitraums detektiert wird,
wobei die Funktionskomponente ein fahrgastseitiger Airbag ist und der Schritt des Reagierens auf das Zustandseinstellungssignal umfasst:
(S221) Detektieren eines Signals eines Kindersitzes auf einem fahrgastseitigen Sitz; und
Einstellen des Zustands des fahrgastseitigen Airbags gemäß einem Detektionsergebnis und dem Zustandseinstellungssignal, wobei der Schritt des Einstellens des Zustands des fahrgastseitigen Airbags gemäß dem Detektionsergebnis und dem Zustandseinstellungssignal umfasst:
falls das Detektionsergebnis besagt, dass ein Signal eines Kindersitzes detektiert wurde und das Zustandseinstellungssignal ein Deaktivierungssignal ist, Einstellen des fahrgastseitigen Airbags gs in einen deaktivierten Zustand;
falls das Detektionsergebnis besagt, dass kein Signal eines Kindersitzes detektiert wurde und das Zustandseinstellungssignal ein Deaktivierungssignal ist, Beibehalten eines aktivierten Zustands des fahrgastseitigen Airbags und Ausgeben von Hinweisinformationen über einen Deaktivierungs-Einstellungsfehler;
falls das Detektionsergebnis besagt, dass ein Signal eines Kindersitzes detektiert wurde und das Zustandseinstellungssignal ein Aktivierungssignal ist, Beibehalten eines deaktivierten Zustands des fahrgastseitigen Airbags und Ausgeben von Hinweisinformationen über einen Aktivierungs-Einstellungsfehler; und
falls das Detektionsergebnis besagt, dass kein Signal eines Kindersitzes detektiert wird und das Zustandseinstellungssignal ein Aktivierungssignal ist, Einstellen des fahrgastseitigen Airbags in einen aktivierten Zustand.

2. Zustandseinstellungsverfahren der Funktionskomponente nach Anspruch 1, **dadurch gekennzeichnet, dass** der Einstellungsverifizierungskanal ein Verifizierungseingabefenster und einen Verifizierungsübertragungskanal umfasst und das durch das Verifizierungseingabefenster ausgelöste Verifizierungssignal über den Verifizierungsübertragungskanal an ein Ausführungs-Ende übertragen wird;
wobei ein nach dem Empfangen des Zustandseinstellungssignals der Funktionskomponente durchgeführter Schritt des Generierens des Einstellungsverifizierungskanals und des Detektierens des Einstellungsverifizierungskanals in Echtzeit umfasst:
nach dem Empfangen des Zustandseinstellungssignals der Funktionskomponente, Anzeigen des Verifizierungseingabefensters auf einem Touchscreen (2) eines Fahrzeugs; und
Überwachen eines Signals des Verifizierungsübertragungskanals in Echtzeit.

3. Zustandseinstellungsverfahren der Funktionskomponente nach Anspruch 1, **dadurch gekennzeichnet, dass** das Zustandseinstellungsverfahren der Funktionskomponente des Weiteren umfasst:
(S240) nach dem Empfangen eines auf der Grundlage des Reagierens auf das Zustandseinstellungssignal zurückgemeldeten Einstellungsvollendungssignals, Ausgeben von dem Einstellungsvollendungssignal entsprechenden Hinweisinformationen an einen Touchscreen (2) eines Fahrzeugs; und/oder
(S250) gemäß dem Einstellungsvollendungssignal, Steuern einer den Zustand der Funktionskomponente angebenden Identifikation auf einem Armaturenbrett (6) des Fahrzeugs so, dass ein Hinweis auf einen entsprechenden Zustand angezeigt wird.

4. Zustandseinstellungsverfahren der Funktionskomponente nach Anspruch 3, **dadurch gekennzeichnet, dass** das Zustandseinstellungsverfahren der Funktionskomponente des Weiteren umfasst:
nach dem Empfangen des Verifizierungssignals, Starten einer Zeitmessung über einen dritten voreingestellten Zeitraum, nach dem Empfangen des auf der Grundlage des Reagierens auf das Zustandseinstellungssignal zurückgemeldeten Einstellungsvollendungssignals innerhalb des dritten voreingestellten Zeitraums, Durchführen eines Schrittes des Ausgebens der dem Einstellungsvollendungssignal entsprechenden Hinweisinformationen an den Touchscreen (2) des Fahrzeugs, und/oder eines Schrittes des Steuerns der den Zustand der Funktionskomponente angebenden Identifikation auf dem Armaturenbrett (6) des Fahrzeugs gemäß dem Einstellungsvollendungssignal, um den Hinweis auf den entsprechenden Zustand anzuzeigen.

5. Zustandseinstellungsvorrichtung eines fahrgastseitigen Airbags, wobei die Zustandseinstellungsvorrichtung des fahrgastseitigen Airbags einen Touchscreen, ein Zustandseinstellungsmodul (3), eine Kraftfahrzeugdomänen-Steuereinheit (1) und ein Airbag-Steuermodul (4) umfasst;
das Zustandseinstellungsmodul (3) dazu eingerichtet ist, einen Zustand des fahrgastseitigen Airbags einzustellen, ein Zustandseinstellungssignal und ein Verifizierungssignal durch Touch-Bedienungen auf dem Touchscreen (2) zu generieren und das Zustandseinstellungssignal und das Verifizierungssignal an die Kraftfahrzeugdomänen-Steuereinheit (1) zu senden;
die Kraftfahrzeugdomänen-Steuereinheit (1) dazu eingerichtet ist, das Zustandseinstellungssignal an das Airbag-Steuermodul (4) zu senden, nachdem das Zustandseinstellungssignal empfangen wurde, und das Verifizierungssignal an das Airbag-Steuermodul (4) zu senden, nachdem das Verifizierungssignal innerhalb des ersten voreingestellten Zeitraums empfangen wurde; und
das Airbag-Steuermodul (4) mit der Kraftfahrzeugdomänen-Steuereinheit (1) bzw. dem fahrgastseitigen Airbag verbunden ist und dazu eingerichtet ist, das Zustandseinstellungssignal zu empfangen und den Zustand des fahrgastseitigen Airbags gemäß dem Zustandseinstellungssignal einzustellen, nachdem das Verifizierungssignal innerhalb eines zweiten voreingestellten Zeitraums empfangen wurde.

6. Zustandseinstellungsvorrichtung des fahrgastseitigen Airbags nach Anspruch 5, **dadurch gekennzeichnet, dass** das Zustandseinstellungsmodul (3) umfasst:
eine Zustandseinstellungssteuerung (31), die dafür verwendet wird, das Zustandseinstellungssignal durch die Touch-Bedienung auf dem Touchscreen (2) zu generieren und das Zustandseinstellungssignal an die Kraftfahrzeugdomänen-Steuereinheit (1) zu senden; und
eine Einstellungsverifizierungssteuerung (32), die dazu eingerichtet ist, das Zustandseinstellungssignal auf dem Touchscreen (2) anzuzeigen, wenn die Zustandseinstellungssteuerung (31) das Zustandseinstellungssignal generiert, und das Verifizierungssignal an die Kraftfahrzeugdomänen-Steuereinheit (1) zu senden, wenn das Verifizierungssignal durch die Touch-Bedienung auf dem Touchscreen (2) innerhalb des ersten voreingestellten Zeitraums generiert wird.

7. Zustandseinstellungsvorrichtung des fahrgastseitigen Airbags nach Anspruch 5, **dadurch gekennzeichnet, dass** die Kraftfahrzeugdomänen-Steuereinheit (1) ein Batteriezustandsmanagementmodul (11) und ein Verarbeitungsmodul (12) umfasst, wobei das Batteriezustandsmanagementmodul (11) mit dem Zustandseinstellungsmodul (3) verbunden ist, und das Verarbeitungsmodul (12) mit dem Batteriezustandsmanagementmodul (11) bzw. dem Airbag-Steuermodul (4) verbunden ist;
das Batteriezustandsmanagementmodul (11) dazu eingerichtet ist, das Zustandseinstellungssignal an das Verarbeitungsmodul (12) zu senden, nachdem das Zustandseinstellungssignal empfangen wurde, und das Verifizierungssignal an das Verarbeitungsmodul (12) zu senden, nachdem das Verifizierungssignal innerhalb des ersten voreingestellten Zeitraums empfangen wurde; und
das Verarbeitungsmodul (12) dazu eingerichtet ist, das Zustandseinstellungssignal an das Airbag-Steuermodul (4) zu senden, nachdem das Zustandseinstellungssignal empfangen wurde, und das Verifizierungssignal an das Airbag-Steuermodul (4) zu senden, nachdem das Verifizierungssignal innerhalb des ersten voreingestellten Zeitraums empfangen wurde.

8. Zustandseinstellungsvorrichtung des fahrgastseitigen Airbags nach Anspruch 5, **dadurch gekennzeichnet, dass** die Zustandseinstellungsvorrichtung des fahrgastseitigen Airbags des Weiteren ein Hinweismodul (5) umfasst, das mit der Kraftfahrzeugdomänen-Steuereinheit (1) verbunden ist;
das Airbag-Steuermodul (4) des Weiteren dazu eingerichtet ist, nach dem erfolgreichen Einstellen des Zustands des fahrgastseitigen Airbags ein Einstellungsvollendungssignal an die Kraftfahrzeugdomänen-Steuereinheit (1) zurückzumelden;
die Kraftfahrzeugdomänen-Steuereinheit (1) des Weiteren dazu eingerichtet ist, eine Einstellungsvollendungshinweis-Instruktion auszugeben, nachdem das Einstellungsvollendungssignal empfangen wurde; und
das Hinweismodul (5) dazu eingerichtet ist, Hinweisinformationen, die der Einstellungsvollendungshinweis-Instruktion entsprechen, auszugeben, nachdem die durch die Kraftfahrzeugdomänen-Steuereinheit (1) zurückgemeldete Einstellungsvollendungshinweis-Instruktion empfangen wurde.

9. Zustandseinstellungsvorrichtung des fahrgastseitigen Airbags nach Anspruch 8, **dadurch gekennzeichnet, dass** die Zustandseinstellungsvorrichtung des fahrgastseitigen Airbags des Weiteren ein Zeitmessungsmodul (13) umfasst, das mit der Kraftfahrzeugdomänen-Steuereinheit (1) verbunden ist und dazu eingerichtet ist, eine Zeitmessung für einen dritten voreingestellten Zeitraum auf der Grundlage zu starten, dass die Kraftfahrzeugdomänen-Steuereinheit (1) das Verifizierungssignal innerhalb des ersten voreingestellten Zeitraums empfängt; und
die Kraftfahrzeugdomänen-Steuereinheit (1) des Weiteren dazu eingerichtet ist, nach dem Empfangen des Einstellungsvollendungssignals innerhalb des dritten voreingestellten Zeitraums eine Erwartete-Einstellungsvollendungshinweis-Instruktion auszugeben und nach dem Empfangen des Einstellungsvollendungssignals, nachdem der dritte voreingestellte Zeitraum abgelaufen ist, eine Unerwartete-Einstellungsvollendungshinweis-Instruktion auszugeben.

10. Zustandseinstellungsvorrichtung des fahrgastseitigen Airbags nach Anspruch 8, **dadurch gekennzeichnet, dass** das Hinweismodul (5) an dem Touchscreen (2) angeordnet ist und/oder das Hinweismodul (5) an einem Armaturenbrett (6) eines Fahrzeugs angeordnet ist.

11. Zustandseinstellungsvorrichtung des fahrgastseitigen Airbags nach Anspruch 5, **dadurch gekennzeichnet, dass** die Zustandseinstellungsvorrichtung fahrgastseitigen Airbags des Weiteren ein Beifahrerdetektionsmodul umfasst, das mit der Kraftfahrzeugdomänen-Steuereinheit (1) oder dem Airbag-Steuermodul (4) verbunden ist und dazu eingerichtet ist, das Detektionsergebnis eines Kindersitzes auf einem fahrgastseitigen Sitz an die Kraftfahrzeugdomänen-Steuereinheit (1) oder das Airbag-Steuermodul (4) zu senden.

12. Fahrzeug, umfassend einen Fahrzeuginnenraum, einen fahrgastseitigen Sitz, der in dem Fahrzeuginnenraum angeordnet ist, einen fahrgastseitigen Airbag und eine Zustandseinstellungsvorrichtung des fahrgastseitigen Airbags nach einem der Ansprüche 5-11;
wobei der fahrgastseitigen Airbag vor dem fahrgastseitigen Sitz angeordnet ist;
die Zustandseinstellungsvorrichtung mit dem fahrgastseitigen Airbag verbunden ist und dazu eingerichtet ist, einen Zustand des fahrgastseitigen Airbags einzustellen; und
ein Touchscreen (2) der Zustandseinstellungsvorrichtung in dem Fahrzeuginnenraum angeordnet ist und dazu eingerichtet ist, den Zustand des fahrgastseitigen Airbags über den Touchscreen (2) einzustellen.

13. Fahrzeug nach Anspruch 12, **dadurch gekennzeichnet, dass** ein Beifahrerdetektionsmodul der Zustandseinstellungsvorrichtung an dem fahrgastseitigen Sitz installiert ist, um einen Kindersitz auf dem fahrgastseitigen Sitz zu detektieren.

## Revendications

1. Procédé de réglage d'état d'un composant fonctionnel, dans lequel le procédé de réglage d'état du composant fonctionnel comprend de :
(S210) à réception d'un signal de réglage d'état du composant fonctionnel, générer un canal de vérification de réglage et surveiller le canal de vérification de réglage en temps réel ;
selon si un signal de vérification du canal de vérification de réglage est détecté durant une première période de temps prédéfinie, le procédé de réglage d'état du composant fonctionnel comprend en outre de :
(S220) répondre au signal de réglage d'état, si le signal de vérification du canal de vérification de réglage est détecté durant la première période de temps prédéfinie ; et
(S230) émettre des informations d'indication sur un échec de réglage d'état et ne pas répondre pas au signal de réglage d'état, si le signal de vérification du canal de vérification de réglage n'est pas détecté durant la première période de temps prédéfinie,
dans lequel le composant fonctionnel est un coussin gonflable côté passager, et l'étape de réponse au signal de réglage d'état comprend de :
(S221) détecter un signal d'un siège enfant sur un siège côté passager ; et
régler l'état du coussin gonflable côté passager en fonction d'un résultat de détection et du signal de réglage d'état, dans lequel l'étape de réglage de l'état du coussin gonflable côté passager en fonction du résultat de détection et du signal de réglage d'état comprend de :
si le résultat de détection est qu'un signal d'un siège enfant est détecté et que le signal de réglage d'état est un signal de désactivation, régler le coussin gonflable côté passager comme un état désactivé ;
si le résultat de détection montre qu'aucun signal d'un siège enfant n'est détecté et que le signal de réglage d'état est un signal de désactivation, maintenir un état activé du coussin gonflable côté passager et émettre des informations d'indication sur un échec de réglage concernant une désactivation ;
si le résultat de détection montre qu'un signal d'un siège enfant est détecté et que le signal de réglage d'état est un signal d'activation, maintenir un état désactivé du coussin gonflable côté passager et émettre des informations d'indication sur un échec de réglage concernant une activation ; et
si le résultat de détection montre qu'aucun signal d'un siège enfant n'est détecté et que le signal de réglage d'état est un signal d'activation, régler le coussin gonflable côté passager comme un état activé.

2. Procédé de réglage d'état du composant fonctionnel selon la revendication 1, **caractérisé en ce que** le canal de vérification de réglage comprend une fenêtre d'entrée de vérification et un canal de transmission de vérification, et le signal de vérification déclenché par la fenêtre d'entrée de vérification est transmis à une extrémité d'exécution par le canal de transmission de vérification ;
une étape consistant à, à réception du signal de réglage d'état du composant fonctionnel, générer le canal de vérification de réglage et la détection du canal de vérification de réglage en temps réel comprend de :
à réception du signal de réglage d'état du composant fonctionnel, afficher la fenêtre d'entrée de vérification sur un écran d'affichage tactile (2) d'un véhicule ; et
surveiller un signal du canal de transmission de vérification en temps réel.

3. Procédé de réglage d'état du composant fonctionnel selon la revendication 1, **caractérisé en ce que** le procédé de réglage d'état du composant fonctionnel comprend en outre de :
(S240) à réception d'un signal de fin de réglage retourné sur la base de la réponse au signal de réglage d'état, émettre des informations d'indication correspondant au signal de fin de réglage sur un écran d'affichage tactile (2) d'un véhicule ; et/ou
(S250) en fonction du signal de fin de réglage, commander une identification indiquant un état du composant fonctionnel sur un tableau de bord (6) du véhicule pour afficher une indication sur un état correspondant.

4. Procédé de réglage d'état du composant fonctionnel selon la revendication 3, **caractérisé en ce que** le procédé de réglage d'état du composant fonctionnel comprend en outre de :
à réception du signal de vérification, démarrer un chronométrage sur une troisième période de temps prédéfinie, à réception du signal de fin de réglage retourné sur la base de la réponse au signal de réglage d'état durant la troisième période de temps prédéfinie, réaliser une étape consistant à émettre les informations d'indication correspondant au signal de fin de réglage sur l'écran d'affichage tactile (2) du véhicule, et/ou une étape consistant à commander l'identification indiquant l'état du composant fonctionnel sur le tableau de bord (6) du véhicule en fonction du signal de fin de réglage pour afficher l'indication sur l'état correspondant.

5. Dispositif de réglage d'état d'un coussin gonflable côté passager, dans lequel le dispositif de réglage d'état d'un coussin gonflable côté passager comprend un écran d'affichage tactile, un module de réglage d'état (3), une unité de commande du domaine automobile (1), et un module de commande de coussin gonflable (4) ;
le module de réglage d'état (3) est configuré pour régler un état du coussin gonflable côté passager, génèrer un signal de réglage d'état et un signal de vérification par des opérations tactiles sur l'écran d'affichage tactile (2), et transmettre le signal de réglage d'état et le signal de vérification à l'unité de commande du domaine automobile (1) ;
l'unité de commande du domaine automobile (1) est configurée pour envoyer le signal de réglage d'état au module de commande de coussin gonflable (4) à réception du signal de réglage d'état, et envoyer le signal de vérification au module de commande de coussin gonflable (4) à réception du signal de vérification durant une première période de temps prédéfinie ; et
le module de commande de coussin gonflable (4) est relié à l'unité de commande du domaine automobile (1) et au coussin gonflable côté passager, respectivement, et est configuré pour recevoir le signal de réglage d'état et régler l'état du coussin gonflable côté passager en fonction du signal de réglage d'état à réception du signal de vérification durant une deuxième période de temps prédéfinie.

6. Dispositif de réglage d'état du coussin gonflable côté passager selon la revendication 5, **caractérisé en ce que** le module de réglage d'état (3) comprend :
une commande de réglage d'état (31), utilisée pour générer le signal de réglage d'état par l'opération tactile sur l'écran d'affichage tactile (2) et transmettre le signal de réglage d'état à l'unité de commande du domaine automobile (1) ; et
une commande de vérification de réglage (32), configurée pour afficher le signal de réglage d'état sur l'écran d'affichage tactile (2) lorsque la commande de réglage d'état (31) génère le signal de réglage d'état, et transmettre le signal de vérification à l'unité de commande du domaine automobile (1) lors de la génération du signal de vérification par l'opération tactile sur l'écran d'affichage tactile (2) durant la première période de temps prédéfinie.

7. Dispositif de réglage d'état du coussin gonflable côté passager selon la revendication 5, **caractérisé en ce que** l'unité de commande du domaine automobile (1) comprend un module de gestion d'état de batterie (11) et un module de traitement (12), dans lequel le module de gestion d'état de batterie (11) est relié au module de réglage d'état (3) et le module de traitement (12) est relié au module de gestion d'état de batterie (11) ou au module de commande de coussin gonflable (4), respectivement ;
le module de gestion d'état de batterie (11) est configuré pour envoyer le signal de réglage d'état au module de traitement (12) à réception du signal de réglage d'état, et envoyer le signal de vérification au module de traitement (12) à réception du signal de vérification durant la première période de temps prédéfinie ; et
le module de traitement (12) est configuré pour envoyer le signal de réglage d'état au module de commande de coussin gonflable (4) à réception du signal de réglage d'état, et envoyer le signal de vérification au module de commande de coussin gonflable (4) à réception du signal de vérification durant la première période de temps prédéfinie.

8. Dispositif de réglage d'état du coussin gonflable côté passager selon la revendication 5, **caractérisé en ce que** le dispositif de réglage d'état du coussin gonflable côté passager comprend en outre un module d'indication (5) relié à l'unité de commande du domaine automobile (1) ;
le module de commande de coussin gonflable (4) est en outre configuré pour retourner un signal de fin de réglage à l'unité de commande du domaine automobile (1) après avoir réglé avec succès l'état du coussin gonflable côté passager ;
l'unité de commande du domaine automobile (1) est en outre configurée pour émettre une instruction d'indication de fin de réglage à réception du signal de fin de réglage ; et
le module d'indication (5) est configuré pour émettre des informations d'indication correspondant à l'instruction d'indication de fin de réglage à réception de l'instruction d'indication de fin de réglage retournée par l'unité de commande du domaine automobile (1).

9. Dispositif de réglage d'état du coussin gonflable côté passager selon la revendication 8, **caractérisé en ce que** le dispositif de réglage d'état du coussin gonflable côté passager comprend en outre un module de chronométrage (13) relié à l'unité de commande du domaine automobile (1) et configuré pour démarrer un chronométrage durant une troisième période de temps prédéfinie sur la base du fait que l'unité de commande du domaine automobile (1) reçoit le signal de vérification durant la première période de temps prédéfinie ; et
l'unité de commande du domaine automobile (1) est en outre configurée pour émettre une instruction d'indication de fin de réglage attendue à réception du signal de fin de réglage durant la troisième période de temps prédéfinie, et émettre une instruction d'indication de fin de réglage inattendue à réception du signal de fin de réglage après l'expiration du chronométrage de la troisième période de temps prédéfinie.

10. Dispositif de réglage d'état du coussin gonflable côté passager selon la revendication 8, **caractérisé en ce que** le module d'indication (5) est disposé sur l'écran d'affichage tactile (2) et/ou le module d'indication (5) est disposé sur un tableau de bord (6) d'un véhicule.

11. Dispositif de réglage d'état du coussin gonflable côté passager selon la revendication 5, **caractérisé en ce que** le dispositif de réglage d'état du coussin gonflable côté passager comprend en outre un module de détection de passager avant relié à l'unité de commande du domaine automobile (1) ou au module de commande de coussin gonflable (4) et configuré pour envoyer un résultat de détection d'un siège enfant sur un siège côté passager à l'unité de commande du domaine automobile (1) ou au module de commande de coussin gonflable (4).

12. Véhicule, comprenant une cabine, un siège côté passager disposé dans la cabine, un coussin gonflable côté passager, et un dispositif de réglage d'état du coussin gonflable côté passager selon l'une quelconque des revendications 5 à 11 ;
dans lequel le coussin gonflable côté passager est disposé devant le siège côté passager ;
le dispositif de réglage d'état est relié au coussin gonflable côté passager et configuré pour régler un état du coussin gonflable côté passager ; et
un écran d'affichage tactile (2) du dispositif de réglage d'état est disposé dans la cabine et configuré pour régler l'état du coussin gonflable côté passager par l'intermédiaire de l'écran d'affichage tactile (2).

13. Véhicule selon la revendication 12, **caractérisé en ce qu'**un module de détection de passager avant du dispositif de réglage d'état est installé sur le siège côté passager pour détecter un siège enfant sur le siège côté passager.
